(19) Europäisches Patentamt

European Patent Office

Office européen des brevets

(11) **EP 2 562 678 A2**

(12) **EUROPEAN PATENT APPLICATION**

(43) Date of publication:
27.02.2013 Bulletin 2013/09

(51) Int Cl.:
*G06K 7/00* (2006.01)   *G06K 19/077* (2006.01)
*H02J 5/00* (2006.01)

(21) Application number: 12160980.4

(22) Date of filing: 23.03.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.08.2011  JP 2011185204

(71) Applicant: Kabushiki Kaisha Toshiba
Minato-ku
Tokyo (JP)

(72) Inventors:
• Kudo, Hiroki
  Tokyo (JP)
• Deguchi, Noritaka
  Tokyo (JP)

• Oodachi, Noriaki
  Tokyo (JP)
• Ogawa, Kenichirou
  Tokyo (JP)
• Shijo, Tetsu
  Tokyo (JP)
• Yamada, Akiko
  Tokyo (JP)
• Obayashi, Shuichi
  Tokyo (JP)
• Shoki, Hiroki
  Tokyo (JP)

(74) Representative: HOFFMANN EITLE
Patent- und Rechtsanwälte
Arabellastrasse 4
81925 München (DE)

(54) **Transmitter and receiver**

(57)    A transmitter transmits both an electric power signal and an information signal. The electric power signal includes a first frequency. The information signal includes a second frequency different from the first frequency.

Fig.1

EP 2 562 678 A2

**Description**

CROSS-REFERENCE TO RELATED APPLICATION

This application is based upon and claims the benefit of priority from. Japanese Patent Application No. 2011-185204, filed on Aug 26, 2011, the entire contents, of which are incorporated herein by reference.

FIELD

Embodiments described herein relate generally to a wireless power transmission.

BACKGROUND

In a wireless power transmission system, communications are performed for adjusting a transmission electric power and preventing from transmitting an electric power to foreign objects. For space·saving, there is a method using a wireless power transmission coil as an antenna for a wireless communication.

BRIEF DESCRIPTION OF THE DRAWINGS

Aspects of this disclosure will become apparent upon reading the following detailed description and upon reference to the accompanying drawing. The description and the associated drawings are provided to illustrate embodiments of the invention and not limited to the scope of the invention.

Fig. 1 is a block diagram showing a wireless power transmission system according to a first embodiment;
Fig. 2A and 2B are block diagrams showing modified wireless power transmission systems according to the first embodiment;
Fig. 3 and 4 are block diagrams showing transmitters according to the first embodiment;
Fig. 5 is a block diagram showing a receiver according to the first embodiment;
Fig. 6 is a block diagram showing other transmitter according to the first embodiment;
Fig. 7 is a graph showing an emission efficiency;
Fig. 8 is a block diagram showing a transmitter according to a second embodiment;
Fig. 9A, 9B, and 10 are block diagrams showing other transmitters according to the second embodiment;
Fig. 11 is a block diagram showing a transmitter according to a third embodiment;
Fig. 12 is a block diagram showing a transmitter according to a fourth embodiment;
Fig. 13 is a graph showing a theoretical efficiency of a magnetic resonance mode of a wireless power transmission; and
Fig. 14 is a block diagram showing a valuable circuit.

DETAILED DESCRIPTION

According to one aspect of the invention, a transmitter includes a driver, a communicator, and a first coil. The driver generates a power signal including a first frequency for a wireless power transmission. The communicator generates an information signal including a second frequency different from the first frequency. The first coil resonates at the first frequency and to transmit both the power signal and the information signal.

The embodiments will be explained with reference to the accompanying drawings.

(Description of the First Embodiment)

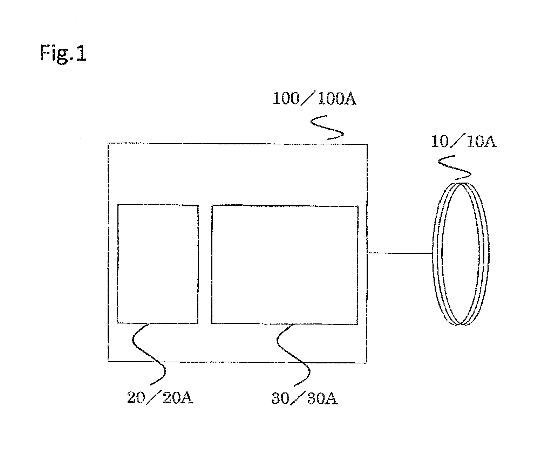

Fig. 1 is a block diagram showing a wireless power transmission system according to a first embodiment. The wireless power transmission system having a magnetic resonance mode can achieve a long-distance electric power transmission. The wireless power transmission system may use any other mode of a wireless power transmission. The wireless power transmission system includes a transmitter 100 and a receiver 100A. The transmitter 100 includes a transmission coil 10. The receiver 100A includes a reception coil 10A. The transmission coil 10 and the reception coil 10A may be any type of a coil which can resonate at a first frequency. For example, the transmission coil 10 and the reception coil 10A may be any shape of a coil and may be a self-resonant coil, or a coil added at least one of a capacitor and an inductor. A coil winding number of the transmission coil 10 and the reception coil 10A may be one or more. The transmission coil 10 and the reception coil 10A may be a loop shape.

The transmitter 100 and the receiver 100A perform both a wireless power transmission and a wireless communication at the same time in the first embodiment. A signal used for the wireless power transmission (hereinafter, referred to as "an electric power signal") and a signal used for the wireless communication (hereinafter, referred to as "an information signal") includes different frequency signals. The transmitter 100 includes a driver 20 and a communicator 30. The receiver 100A includes a load 20A and a communicator 30A. The electric power signal generated by the driver 20 is transmitted via the transmission coil 10 and the reception coil 10A. The electric power signal is provided to the load 20A The load 20A uses the electric power signal as an electric power. An information signal generated by one communicator 30/30A of the transmitter100 or the receiver 100A is transmitted via the transmission coil 10 and the reception coil 10A and then received by the other communicator 30/30A of the transmitter100 or the receiver 100A.

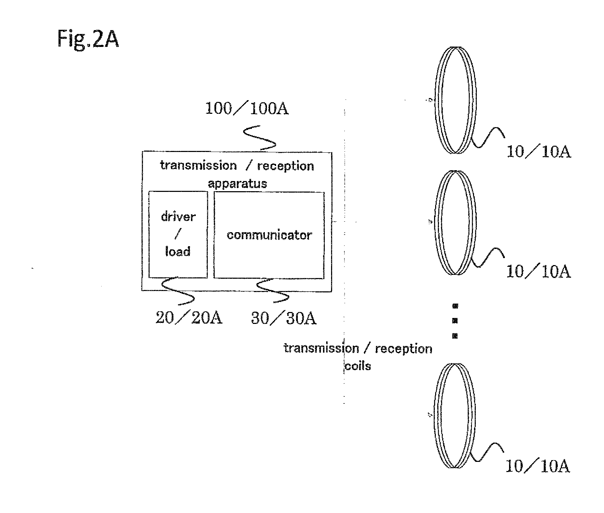

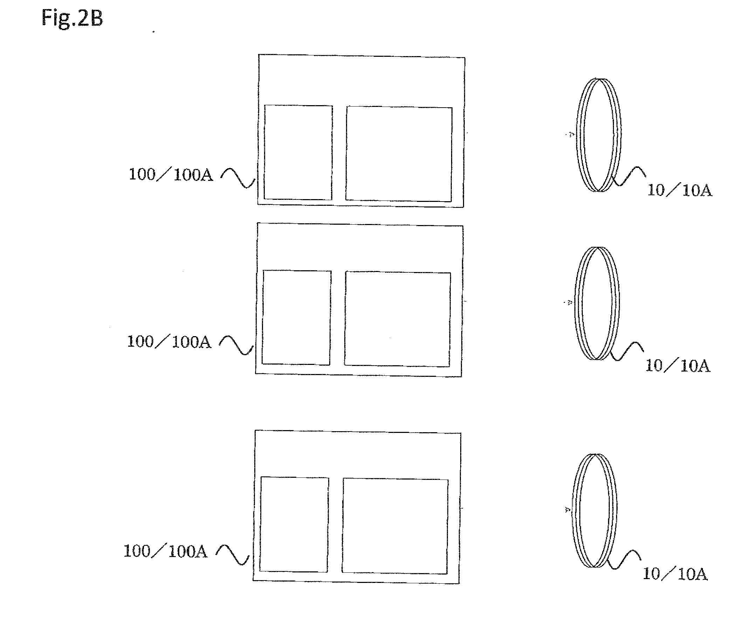

Fig.2A and 2B are block diagrams showing a modified wireless power transmission system according to the first embodiment. As shown in Fig.2A, a transmitter 100 includes a plurality of transmission coils 10, a receiver 100A includes a plurality of reception coils 10A. As shown in Fig.2B, a transmitter side includes a plurality of transmitters 100, and a receiver side includes a plurality of receivers 100A. Each of transmission coils 10 and reception coils 10A may have a certain resonant frequency, a certain path length, or a certain electrical length. Each of transmission coils 10 and reception coils 10A may have different resonant frequencies, different path lengths, or different electrical lengths.

Fig, 3 is a block diagram showing a transmitter 100 according to a first embodiments, The transmitter 100 includes a transmission coil 10, a driver 20, and a communicator 30. The transmission coil 10 is used as both an antenna for a wireless power transmission and an antenna for a wireless communication. A resonant frequency of the transmission coil is a first frequency.

The driver 20 generates an electric power signal for transmitting an electric power. The electric power signal may be either one of an electric power signal of an electric voltage or an electric power signal of a current. The power signal may have at least the first frequency or a neighborhood of the first frequency (hereinafter, referred to as "a first frequency electric power signal").

The communicator 30 generates an information signal for a wireless communication. The information signal may be either one of an information signal of an electric voltage or a power signal of a current. The information signal may have at least a second frequency or a neighborhood of the second frequency (hereinafter, referred to as "a second frequency information signal"). The second frequency is different from the first frequency. The communicator 30 performs other processes for a wireless communication, for example a modulation, a demodulation, an encoding, a decoding, and so on.

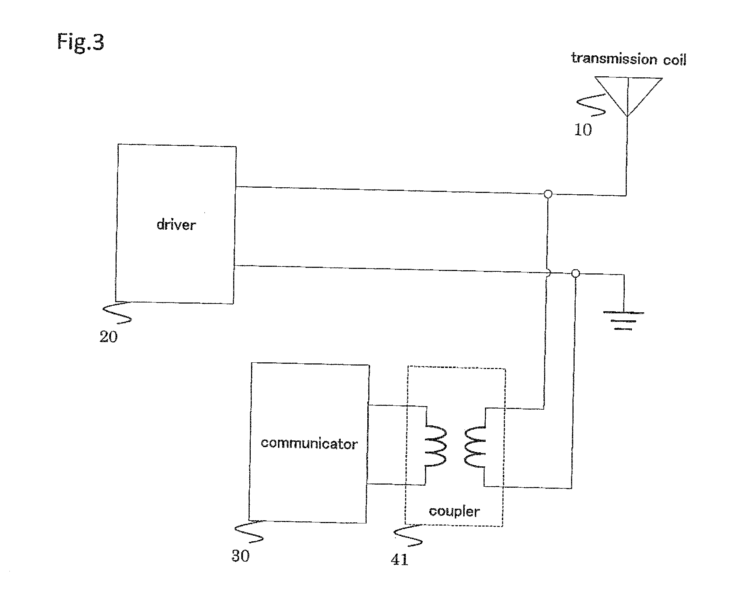

An example shown in Fig.3, which is a transmitter 100 includes a coupler 41, the transmitter 100 includes a protection circuit instead of the coupler 41 between the transmission coil 10 and the communicator 30. The protection circuit suppresses and prevents decreasing a transmission rate of a wireless communication and a destruction of a device caused by a leakage of the electric power signal, which is a big electrical power noise, to the communicator 30. The protection circuit may be any circuit capable of preventing leakage of the electric power signal to the communicator 30, for example the coupler 41, a band-pass filter (BPF) 42, a capacitor, and so on. During an electric power transmission, the protection circuit combines the electric power signal and the information signal. During an electric power reception, the protection circuit divides into the electric power signal and the information signal. The coupler 41 may have a frequency characteristic to cut off the first frequency regarding the electric power signal and to pass the second frequency regarding the information signal.

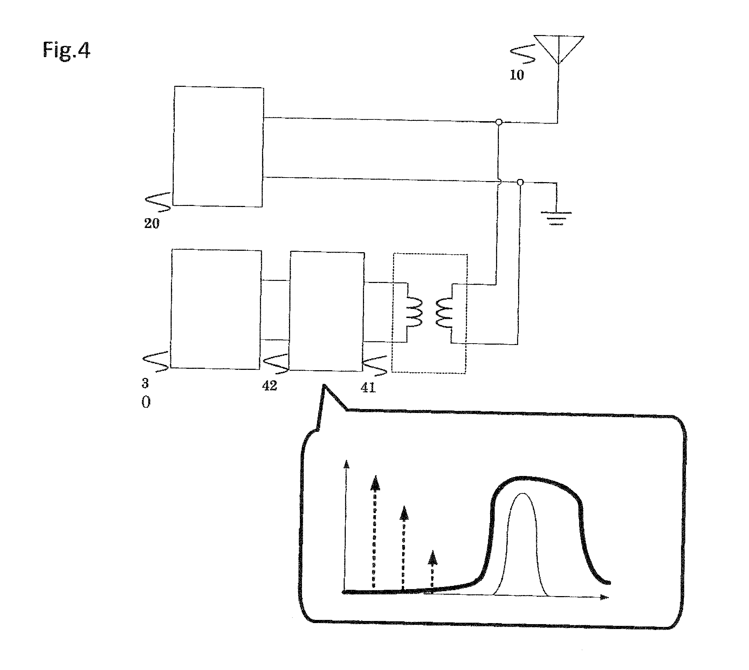

Fig. 4 is a block diagram showing an example of a transmitter 100 includes a protection circuit including the coupler 41 and the band-pass filter 42. The coupler 41 may have the frequency characteristic mentioned above. The band-pass filter 42 may have a frequency characteristic to cut off the first frequency (indicated by f1 as in Fig.4) and to pass the second frequency (indicated by f2 as in Fig.4),

A transmitter 100 according to the first embodiment can further include a controller (not described in a figure). The controller controls a start (timing) or an end (timing) of a wireless power transmission and a wireless communication by controlling the driver 20 and the communicator 30. The controller can determine what information (e.g. control information for a wireless power transmission and so on) should be exchanged between the transmitter 100 and the receiver 100 and can control an amplitude of the electric power signal, an amount of a wireless power transmission, and so on according to the control information.

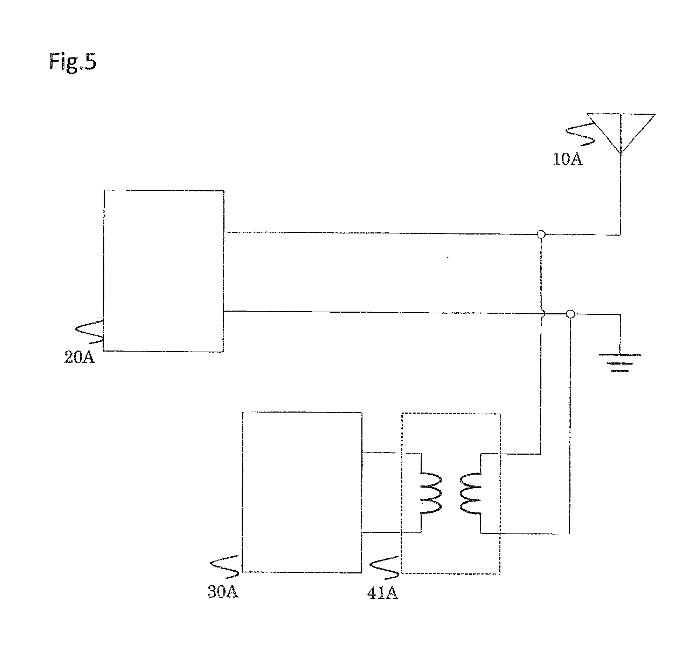

Fig. 5 is a block diagram showing a receiver 100A according to a first embodiment. The receiver 100A includes a reception coil 10A, a load 20A, and a communicator 30A. The reception coil 10A is used as both an antenna for a wireless power transmission and an antenna for a wireless communication. A resonant frequency of the reception coil 10A is the first frequency. The load 20A is any element or any device capable to using or charging an electric power transmitted from the transmitter 100. The communicator 30A is same as the communicator 30 mentioned above. A protection circuit and a controller in the receiver 100A are same as the protection circuit and the controller in the transmitter 100 mentioned above.

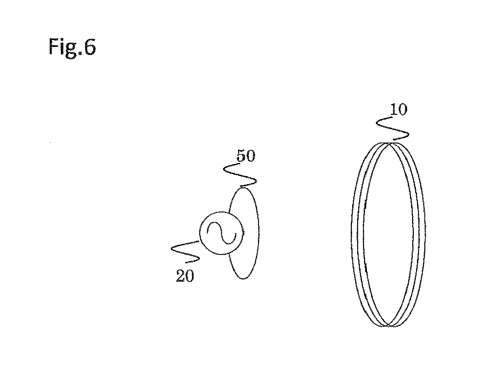

Fig. 6 is a block diagram showing one example of a transmitter 100 according to a first embodiment. The transmitter 100 includes a driver 20, a communicator 30 (not described in Fig. 6), a feed coil 50, and a transmission coil 10. The feed coil 50 is directly connected with the driver 20 and is coupled to the communicator 30 via the protection circuit (not described in Fig. 6). The feed coil 50 and the transmission coil 10 are electromagnetically-coupled. The feed coil 50 may be any type of a coil capable to resonate at the second frequency. A frequency at which the feed coil 50 resonates ,which depends on a shape of the feed coil 50, is a neighborhood of a frequency having a wavelength being same as integer division of a path length or an electrical length of the feed coil 50. Generally, an emission efficiency of the transmitter 100 is high, if using the feed coil 50 as an antenna at the second frequency. The feed coil 50 may be any shape of a coil. A coil winding number of the feed coil 50 may be one or more. The feed coil 50 may be a loop shape.

The electric power signal generated by the driver 20 may be provided to the transmission coil 10 indirectly via the feed coil 50. The electric power signal may be provided to the transmission coil 10 directly. A Q value of the transmission coil 10 is for example more than 100, may be not more than 100. The information signal generated by the communicator 30 is provided to the feed coil 50 via the protection circuit. An impedance matching between the transmitter 100 and the receiver 100A can be achieved by changing a coupling between the feed coil 50 and the transmission coil 10.

A frequency for a wireless power transmission may be a neighborhood of a resonant frequency (the first frequency) of the transmission coil 10 and the reception coil 10A.

At a neighborhood of a resonant frequency of the transmission coil 10 and the reception coil 10A, a strong coupling between the transmission coil 10 and the reception coil 10A is made by both a resonance of the transmission coil 10 and a resonance of the reception coil 10A which are mediated by a near electromagnetic field. In the situation, an emission loss and a conductor loss of a wireless power transmission can be a minimum.

A frequency for a wireless communication may be a resonant frequency (the second frequency) of the feed coil 50. The communicator performs a wireless communication by using a radio wave (an electromagnetic wave) emitted by the transmission coil 50. The information signal generated by the communicator 30 includes a frequency (a frequency of a high emission efficiency of a radio wave) at which the transmission coil 10 emits efficiently the information signal as a radio wave.

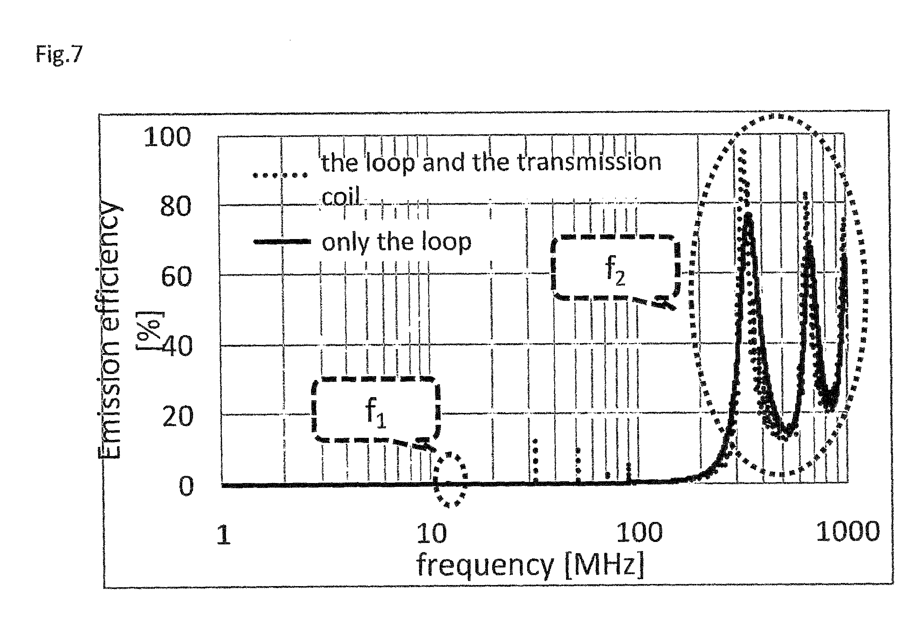

Fig. 7 is a graph showing a frequency characteristic of a radio wave emission efficiency of the transmitter 100 shown in Fig. 6. Fig. 7 is a simulation result. Simulation conditions are a feed coil 50 is a loop shape (a coil winding number of the feed coil 50 is one), a resonant frequency of which one wavelength is same as a path length of the feed coil 50 is approximately 330 megahertz [MHz], a coil winding number of a transmission coil 10 is more than one, and a resonant frequency of the transmission coil 10 determined by an inductance and a capacitance of the transmission coil 10 is approximately 13.56 MHz. Fig. 7 shows a frequency characteristic of a radio wave emission efficiency from only the feed coil 50 (a shape of the feed coil 50 is a loop shape) in the transmitter 100 (indicated by a continuous line), and a frequency characteristic of a radio wave emission efficiency from the feed coil 50 (a shape of the feed coil 50 is a loop shape) and the transmission coil 10 in the transmitter 100 (indicated by a dashed line). This simulation is performed based on a reflectance loss as one of factors.

A radio wave emission efficiency at a neighborhood of a resonant frequency of the transmission coil 10 and the reception coil 10A (13.56 MHz) is low. A radio wave emission efficiency at a neighborhood of a resonant frequency of the feed coil 50 (330 MHz, 660 MHz) is high.

A frequency at which a radio wave emission efficiency of only the feed coil 50 becomes a local maximum and a frequency at which a radio wave emission efficiency of the feed coil 50 and the transmission coil 10 becomes a local maximum are in a neighborhood and approximately same. A radio wave emission efficiency becomes a maximum at a frequency (approximately 330MHz in an example shown in Fig. 7) of which one wavelength is same as a path length or an electric length of the feed coil 50. Radio wave emission efficiencies become local maximum at frequencies (approximately 660MHz, 990MHz, 1320MHz, and so on in an example shown in Fig. 7) of which wavelengths are same as integer (more than one) division of a path length or an electric length of the feed coil 50. Frequencies at which radio wave emission efficiencies become high are determined according to a resonant frequency, a path length, or an electric length of the feed coil 50. If a shape of a feed coil 50 is a loop shape, the feed coil 50 resonates at a frequency of which one wave length is same as a path length or an electric length of the feed coil 50. If a shape of a feed coil 50 is a shape other than a loop shape, the feed coil 50 resonates at a neighborhood of frequencies of which wavelengths are same as integer division of a path length or an electric length of the feed coil 50. The transmitter 100 can achieve high radio wave emission efficiency by using resonant frequencies mentioned above.

A frequency for a wireless power transmission (a frequency of the electric power signal generated by the driver 20) is set to a neighborhood of a resonant frequency (f1) of the transmission coil 10, because high wireless power transmission efficiency is preferred. A frequency for a wireless communication (a frequency of the information signal generated by the communicator 30) is set to a neighborhood of a resonant frequency (f2) of the feed coil 10, because high radio wave emission efficiency is preferred. A frequency for the electric power signal and a frequency for the information signal are set according to a method mentioned above, the transmission coil 10 and the reception coil 10A can be used as both an antenna for a wireless power transmission and an antenna for a wireless communication, for space-saving, a high efficient wireless power transmission, and a high efficient wireless communication.

If a resistance of the load 20A is changed, high-harmonics of a resonant frequency (f1) of the transmission coil 10 are generated. The high-harmonics are noises for the communicator 30. The information signal generated by the communicator 30 is provided to the transmission coil 10 via the protection circuit, and then the protection circuit prevents and suppresses a leakage of high-harmonics of the electric power signal to the communicator 30.

A resonant frequency (f2), a path length, and an electric length of the feed coil 50 can be determined so that the resonant frequency (f2) of the feed coil 50 is not equal to any integral multiple of a resonant frequency of the transmission coil 10. A filtering effect of the feed coil 50 prevents and suppresses a leakage of high-harmonics of the electric power signal to the communicator 30.

The feed coil 50 and the transmission coil 10 have higher radio wave emission efficiency at a resonant frequency (f2) of the feed coil 50 than that of only the feed coil 50 (shown in Fig. 7). Because a Q value of a whole antenna (the feed coil 50 and the transmission coil10) become higher than that of only feed coil by existence of the transmission coil 10 having higher Q value and positioned forwards of the feed coil 50.

A maximum value of a radio wave emission efficiency of the feed coil 50 and the transmission coil 10 is higher than that of only the feed coil 50. A communication bandwidth of only the feed coil 50 is approximately 100MHz. A communication bandwidth of the feed coil 50 and the transmission coil 10 is approximately 45MHz. A communication bandwidth of only the feed coil 50 is broader than a communication bandwidth of the feed coil 50 and the transmission coil 10. A communication bandwidth is determined by a frequency range of which radio wave emission efficiencies are not less than a value decreased 3dB from the maximum value.

Frequencies at which a radio wave emission efficiency is high are determined by not only a path length of the feed coil 50 but also an electrical length of the feed coil 50. The electrical length of the feed coil 50 depends on whether a capacitor is connected with the feed coil 50 or not. Frequencies at which a radio wave emission efficiency is high can be changed by adding a capacitor and so on to the feed coil. For example, frequencies at which a radio wave emission efficiency can be set to frequencies used by an existing wireless communication system (for example, wireless local area network and so on), then the communicator 30 can be an existing communicator compatible with an existing wireless system.

A controller included in the transmitter 100 according to the first embodiment can perform below procedures before start of a wireless power transmission by a wireless communication with the receiver 100. Procedures performed before start of a wireless power transmission are (1) a confirmation of a wireless power reception request from the receiver 100, (2) an authentication by an ID (identification) for preventing a stealing electrical power, (3) a confirmation of an electric power amount requested by the receiver 100, (4) an adjustment for a high efficient wireless power transmission, (5) a confirmation of whether an electric power requested by the receiver 100A is satisfied or not by using a trial wireless power transmission, and so on. The controller can omit at least one step of (1) to (5). The transmitter 100 can perform both a wireless power transmission and a wireless communication via a same antenna (the transmission coil 10) at the same time. The controller can perform an adjustment for a high efficient wireless power transmission during performing a wireless power transmission.

The controller can collect parameters for a wireless power transmission from a frequency characteristic of the information signal and so on by a wireless communication performed before a wireless power transmission, because of sharing an antenna for a wireless power transmission and an antenna for a wireless communication.

The controller can estimate a distance between the transmission coil 10 and the reception coil 10A by using a receiving power of the information signal and so on. Because of sharing an antenna for a wireless power transmission and an antenna for a wireless communication, a distance between antennas of a transmitter side and a receiver side for a wireless communication and a distance between an antenna of a transmitter side and a receiver side for a wireless power transmission are same. When performing a wireless power transmission, it is reasonably expected that an environment between the transmission coil 10 and the reception coil 10A is line of sight (LOS). If an environment between the transmission coil 10 and the reception coil 10A is line of sight (LOS), a propagation loss of a direct wave of a wireless communication is substantially equal to a distance decay of the direct wave. The controller can estimate a distance between the transmission coil 10 and the reception coil 10A by using a propagation loss of a direct wave of a wireless communication. If a radio wave transmission of a wireless communication is a free-space transmission and a distance between the transmission coil 10 and the reception coil 10A is "r" , a radio wave decays according to both square of a distance and square of a frequency in a far field. The controller can estimate a distance between the transmission coil 10 and the reception coil 10A by using a frequency of a wireless communication and a receiving power of the information signal.

The controller can estimate a coupling factor (k) by using an estimated distance between the transmission coil 10 and the reception coil 10A. A coupling factor (k) depends on not only a distance between the transmission coil 10 and the reception coil 10A but also a position relationship and an angular relationship between the transmission coil 10 and the reception coil 10 A. The controller can estimate a coupling factor (k) by using an estimated distance between the transmission coil 10 and the reception coil 10A by supposing some kinds of a position relationship and an angular relationship between the transmission coil 10 and the reception coil 10A. The controller can estimate a coupling factor (k) by using a correspondence table, which depends on a system, between a coupling factor (k) and a distance between the transmission coil 10 and the reception coil 10A.

The controller can estimate a theoretical maximum transmission efficiency of a wireless power transmission by using a coupling factor (k) between the transmission coil 10 and the reception coil 10A. A theoretical maximum transmission efficiency is calculated by a below formula.

$$\eta = \frac{2 + k^2 Q_1 Q_2 - 2\sqrt{1 + k^2 Q_1 Q_2}}{k^2 Q_1 Q_2}$$

A Q value of the transmission coil 10 is "Q1" . A Q value of the reception coil 10A is "Q2" . A coupling factor is "k" .

The controller can estimate a receiving power of the receiver 100A at a wireless power transmission by using estimated transmission efficiency and a transmission power of the transmitter 10 at a wireless power transmission. If a receiving power of the receiver 100A at a wireless power transmission is estimated by the controller, the controller can omit a procedure (5) which is a confirmation of whether an electric power requested by the receiver 100A is satisfied or not by using a trial wireless power transmission

For judging whether an electric power requested by the receiver 100A is satisfied or not, the controller can use a fixed threshold value, a threshold value indicated by a requested electric power received from the receiver 100A. The controller can judge whether a wireless power transmission is enabled or not by a magnitude relationship between a threshold and an estimated receiving power of the receiver 100A, or a magnitude relationship between a threshold and a receiving power of the receiver 100A at a trial wireless power transmission. The controller can start or continue a wireless power transmission if a receiving power of the receiver 100A is equal to or higher than a threshold value. The controller can stop a wireless power transmission if a receiving power of the receiver 100A is lower than a threshold value. If the controller judges a wireless power transmission is disabled, the controller can notify a message to a user. The message is that a wireless power transmission is disabled, that it is needed to set the transmitter 100 closer to the receiver 100A, that it is needed to adjust a position relationship between the transmitter 100 and the receiver 100A, and so on.

In the first embodiment, an example of using both the feed coil 50 and the transmission coil 10 is explained as shown in Fig. 6, but an example of using only the transmission coil 10 is also usable as shown in Fig. 3 and Fig. 4. The driver 20 generates the electric power signal including the first frequency which is a resonant frequency of the transmission coil 10. The communicator 30 generates the information signal including the second frequency which is different from the first frequency. A radio wave emission efficiency of the first frequency is higher than that of the second frequency. A frequency at which a radio wave emission efficiency is high (the second frequency) depends on a self-resonant frequency of transmission coil 10, or a resonant frequency depending a path length or an electrical length of the transmission coil 10. As mentioned above, the feed coil 50 can be omitted, and then more space-saving can be achieved.

(Description of the Second Embodiment)

In the first embodiment, an example of both the driver 20 and the communicator 30 directly connected with the feed coil 50 is explained. But an example of the driver 20 directly connected with the transmission coil 10 and the communicator 30 directly connected with the feed coil 50 can be also implementable.

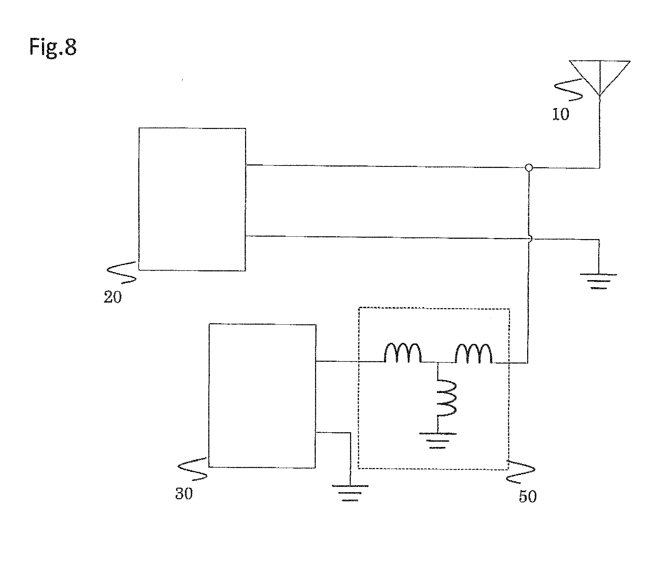

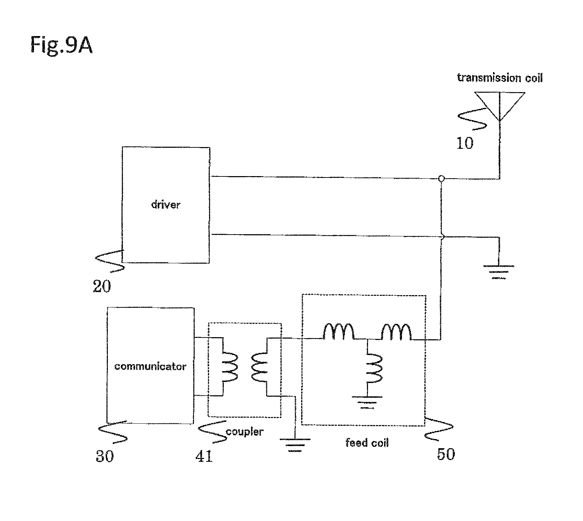

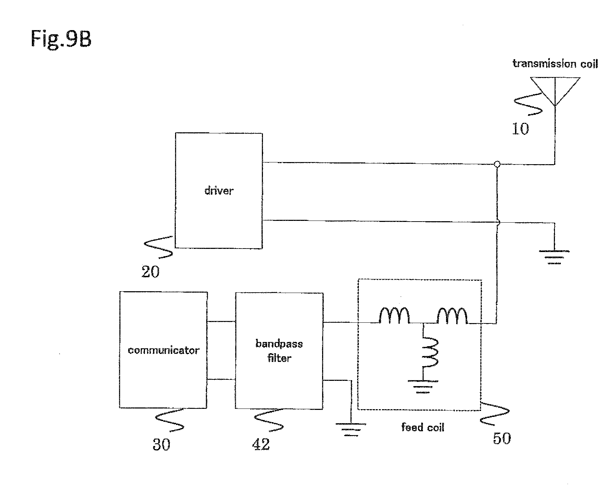

Fig. 8 is a block diagram showing a transmitter 200 according to a second embodiment. Fig. 9 is a block diagram showing another example of a transmitter 200, including the protection circuit, according to a second embodiment. The driver 20 is connected with the transmission coil 10. The communicator 30 is connected with the feed coil 50. The transmission coil 10 and the feed coil 50 are electromagnetically-coupled. The protection circuit can be inserted between the communicator 30 and the feed coil 50. A receiver according to the second embodiment can be implemented by replacing the driver 20 with the load 20A, as same as the first embodiment. The transmitter coil 10, the feed coil 50, the driver 20, the communicator 30, the protection circuit (including the coupler 41, the band-pass filter, and so on), and the load 20A are same as the first embodiment, so their explanation are omitted by numbering same numbers.

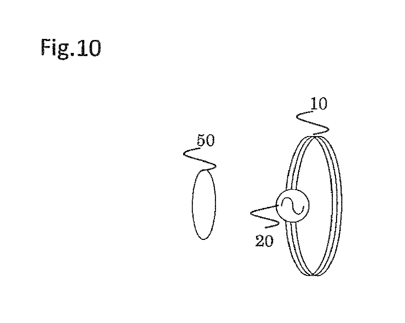

Fig. 10 is a block diagram showing an example of a transmitter 200 according to a second embodiment. As different from the first embodiment (Fig. 6 and so on), the driver 20 is connected with the transmission coil 10 instead of the transmission coif 10. Except a connection relationship between the driver 20 and coils, the second embodiment is same as the first embodiment.

A frequency characteristic of a radio wave emission efficiency of the second embodiment is same as the frequency characteristic shown in the Fig. 7. Therefore, as same as the transmitter 100 according to the first embodiment, space·saving, high efficient wireless power transmission, and high performance wireless communication can be achieved by determining both a frequency of the electric power signal and a frequency of the information signal and by sharing an antenna for a wireless power transmission and an antenna for a wireless communication. The transmitter 200 according to a second embodiment can be applied to same modifications disclosed in the first embodiment.

(Description of the Third Embodiment)

As comparing the first and second embodiment, a transmitter 300 according to the third embodiment further includes a transmission power controller 60. The transmission power controller 60 controls a transmission power of the information signal transmitted by the communicator 30. The transmission power controller 60 can be implemented as same or different controller according to the first embodiment.

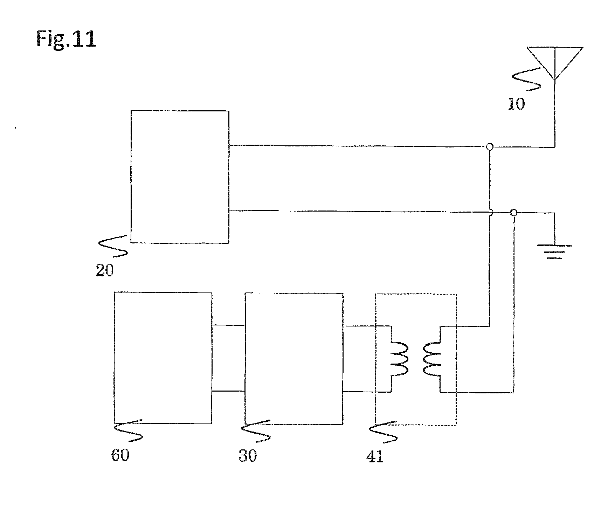

Fig. 11 is a block diagram showing an example of a transmitter 300 according to a third embodiment. The transmitter 300 further includes a transmission power controller 60. The transmission power controller 60 controls a transmission power of the information signal transmitted by the communicator 30. The transmission power controller 60 can also control a transmission rate of the information signal. A high efficient wireless power transmission is preferable, and a reachable distance for a wireless power transmission depends on a threshold value. If sharing an antenna for a wireless power transmission and a wireless communication at both a transmitter side and a receiver side, a reachable distance for a wireless power transmission and a reachable distance for a wireless communication can be same. If a reachable distance for a wireless communication is longer than a reachable distance for a wireless power transmission, a part of a transmission power for a wireless communication is wasted. For an example, if 10 watts [W] is a threshold value, it is sufficient that a wireless communication can be performed in a range that a receiving power of a wireless power transmission is equal to or more than 10W, but it is not needed according to circumstances that a wireless communication can be performed in a range that a receiving power of a wireless power transmission is less than 10W.

The transmission power controller 60 can control a transmission power of the information signal so that the information signal cannot be received in range that a receiving power of a wireless power transmission is less than a threshold value, for power saving. The transmission power controller 60 can control a transmission power of the information signal by receiving a notification of a receiving power from a receiver. The transmission power controller 60 can decrease a transmission power of the information signal in a step-by-step manner and can set a transmission power of the information signal immediately before receiving a notification indicating a fail to receive the information signal from a receiver.

The communicator 30 can change a transmission rate of the information signal. A high transmission rate of a wireless communication can be achieved in a condition of high signal-to-noise ratio. A high error resistance of a wireless communication can be achieved in a condition of low signal-to-noise ratio by decreasing a transmission rate of the information signal.

(Description of the Fourth Embodiment)

A transmitter 400 according to the forth embodiment, as comparing the first, second, and third embodiments, further includes a valuable circuit 70. The valuable circuit is for changing a Q value of the transmission coil. The valuable circuit 70 and a Q value of the transmission coil 10 can be controlled by same or different controller according to the first or third embodiment (hereinafter, referred to as "a Q value controller") or a user.

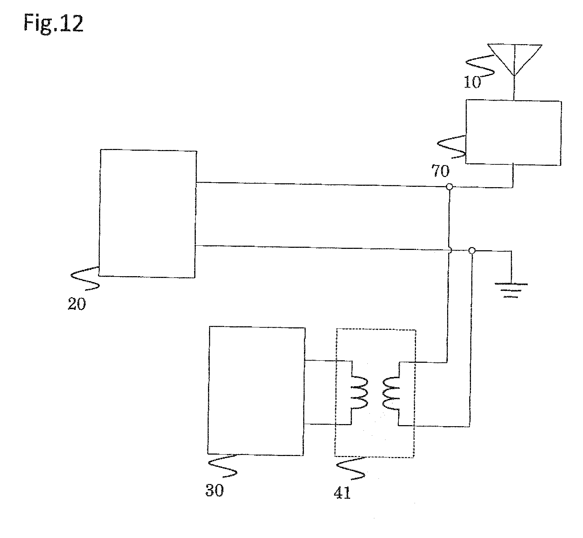

Fig. 12 is a block diagram showing an example of a transmitter 400 according to a fourth embodiment. The transmitter 400 further includes a valuable circuit 70. The valuable circuit 70 changes a Q value of the transmission coil 10. The transmitter 400 can further includes a Q value controller (not described in Fig. 12). The Q value controller controls the valuable circuit 80 and a Q value of the transmission coil 10 by using at least one of a priority of a wireless power transmission and a priority of a wireless communication.

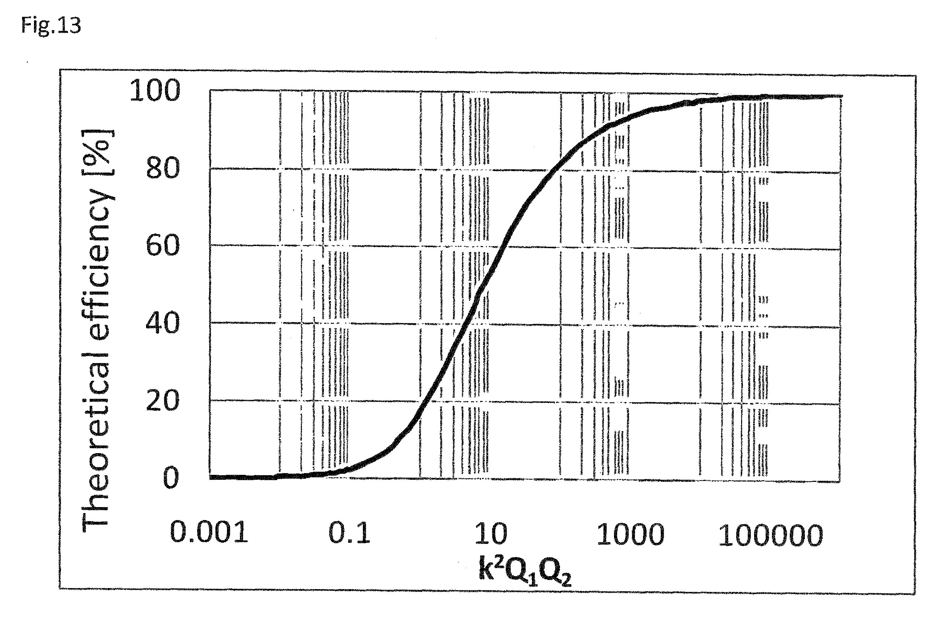

Fig. 13 is a graph showing theoretical power transmission efficiency according to the formula 1. Theoretical power transmission efficiency is a monotone increasing function according to a square of a coupling factor (k), a Q value of the transmission coil 10, and a Q value of the reception coil 10A. The higher Q values of the transmission coil 10 and the reception coil 10A (Q1, Q2) are, the higher power transmission efficiency becomes. But if Q values of the transmission coil 10 and the reception coil 10A (Q1 Q2) are high, a frequency characteristic of a radio wave emission efficiency has a sharp peak. If a frequency characteristic of a radio wave emission efficiency has a sharp peak, a frequency band at which a radio wave emission efficiency is high (a frequency band usable by a wireless communication, that is a communication band) becomes a narrow band. Then a transmission rate of a wireless communication becomes a low.

A priority of a wireless power transmission and a priority of a wireless communication can be described by a two value (high or low), or a three value ( high, medium, or low), respectively. A priority of a wireless power transmission and a priority of a wireless communication can be described so that a sum of a priority of a wireless power transmission and a priority of a wireless communication. The Q value controller can control a Q value of the transmission coil 10 by controlling the valuable circuit 70 according to at least one of a priority of a wireless power transmission and a priority of a wireless communication to change a wireless power transmission efficiency and a transmission rate of a wireless communication.

If the communicator 30 receives a notification indicating that a remaining amount of a battery of a receiver is less than a first threshold value (a remaining amount of a battery is low), the Q value controller can set a priority of a wireless power transmission to 100 (a maximum value) and can set a Q value of the transmission coil 10 to a maximum value. If the communicator 30 receives a notification indicating that a remaining amount of a battery of a receiver is more than a second threshold value (bigger than the first threshold value) (a remaining amount of a battery is high, or a battery is full), the Q value controller can set a priority of a wireless communication to 100 (a maximum value) and can set a Q value of the transmission coil 10 to a minimum value. The Q value controller can achieve a wireless power transmission and a wireless communication in response to a status of a receiver. A priority of a wireless power transmission and a priority of a wireless communication can be set according to not only a status of a battery in a receiver but also an indication from a receiver, a negotiation before start of a wireless power transmission, or a user setting.

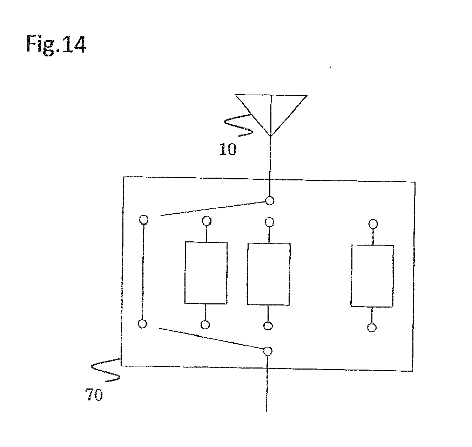

Fig. 14 is a block diagram showing a valuable circuit 70. The valuable circuit 70 can change a Q value of the transmission coil 10 by adding different resistance having different ohmic values into the transmission coil 10 as shown in Fig. 14. By above method, the valuable circuit 70 can change a Q value of the transmission coil 10 without changing a resonant frequency of the transmission coil 10.

The valuable circuit 70 can add different capacitors (C) having different capacitance values or can add different inductors (L) having different inductance values to change a Q value of the transmission coil 10.

By above method, a resonant frequency of the transmission coil 10 can be changed. But the valuable circuit 70 can control at least one of a capacitance and an inductance to change a Q value of the transmission coil 10 without changing a resonant frequency of the transmission coil 10.

The Q value controller can prevent a heat generation by stopping a wireless power transmission and adding a big resistance into the transmission coil 10, if a priority of a wireless power transmission is very low (such as a priority is "0" ).

While certain embodiments have been described, these embodiments have been presented by way of example only, and are not intended to limit the scope of the inventions. Indeed, the novel systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions. In addition, a transmitter is explained in detail in the first to fourth embodiment, but these technologies described in the first to fourth embodiments except technologies regarding the driver 20 can be applied to a receiver for a high efficient wireless power reception and so on. In addition, a transmitting and receiving apparatus can be achieved by combination of these technologies. The transmitting and receiving apparatus includes at least part of elements and functions of both any one of transmitters 100, 200, 300, 400 and the receiver 10A.

## Claims

1.  A transmitter comprising:

    a driver to generates a power signal including a first frequency for a wireless power transmission;
    a communicator to generates an information signal including a second frequency different from the first frequency; and
    a first coil to resonate at the first frequency and to transmit both the power signal and the information signal.

2.  The transmitter of claim 1, further comprising:

    a second coil electromagnetically-coupled with the first coil,
    wherein the second frequency is either one of a neighborhood of a resonant frequency of the second coil or a frequency determined by the resonant frequency of the second coil.

3.  The transmitter of claim 2, wherein
    the second frequency is a frequency determined by either one of a path length of the second coil or an electrical length of the second coil.

4.  The transmitter of claim 2 or 3, further comprising:

a third coil electromagnetically-coupled with the second coil,
wherein a resonant frequency of the third coil and the resonant frequency of the second coil are different, and
the communicator outputs the information signal to at least either one of the second coil or the third coil.

5. The transmitter of one of claims 1 to 4, further comprising:

a first controller to control a start of a power transmission by using an electric power amount received by a receiver side estimated by using a received power of an information signal at the communicator.

6. The transmitter of one of claims 1 to 5, further comprising:

a second controller to control a transmitting power of the information signal by using a reachable distance of an electric power transmitted via the first coil.

7. The transmitter of one of claims 1 to 6, further comprising
a variable circuit to change a Q value of the first coil according to a priority of a wireless power transmission and a priority of a wireless communication via the first coil.

8. A receiver comprising:

a first coil to resonates at a first frequency and to receive both a power signal and a information signal, the power signal includes a first frequency and being for a wireless power transmission, the information signal includes a second frequency different from the first frequency;
a load to be provided with the power signal; and
a communicator to receive the information signal.

Fig.1

100/100A

10/10A

20/20A    30/30A

EP 2 562 678 A2

Fig.2A

100/100A

transmission / reception
apparatus

driver
/
load

communicator

20/20A    30/30A

transmission / reception
coils

10/10A

10/10A

10/10A

EP 2 562 678 A2

Fig.2B

10/10A

10/10A

10/10A

100/100A

100/100A

100/100A

Fig.3

transmission coil

driver 20

10

communicator 30

coupler 41

EP 2 562 678 A2

Fig.4

10

20

30

42

41

EP 2 562 678 A2

14

Fig.5

Fig.6

10

50

20

Fig.7

Fig.8

Fig.9A

transmission coil

10

driver

20

communicator

coupler

feed coil

30          41                    50

EP 2 562 678 A2

Fig.9B

Fig.10

EP 2 562 678 A2

Fig.11

Fig.12

EP 2 562 678 A2

Fig.13

EP 2 562 678 A2

Fig.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011185204 A